Europäisches Patentamt

European Patent Office

Office européen des brevets

(19)

(11) EP 0 887 101 A1

(12) EUROPEAN PATENT APPLICATION

(43) Date of publication:
30.12.1998 Bulletin 1998/53

(51) Int Cl.6: B01D 71/02

(21) Application number: 98870141.3

(22) Date of filing: 23.06.1998

(84) Designated Contracting States:
AT BE CH CY DE DK ES FI FR GB GR IE IT LI LU
MC NL PT SE
Designated Extension States:
AL LT LV MK RO SI

(30) Priority: 24.06.1997 BE 9700537

(71) Applicant: "VLAAMSE INSTELLING VOOR
TECHNOLOGISCH ONDERZOEK",
afgekort "V.I.T.O."
2400 Mol (BE)

(72) Inventors:
• Vercauteren, Sven
  3590 Diepenbeek (BE)
• Luyten, J.
  3054 Vaalbeek (BE)
• Vansant, E. F.
  2980 Zoersel (BE)
• Leysen, R.
  2400 Mol (BE)

(74) Representative: Van Malderen, Joelle et al
Office Van Malderen,
Place Reine Fabiola 6/1
1083 Bruxelles (BE)

(54) Microporous ceramic membrane having a separating layer composed of modified synthetic smectite clay

(57) The subject of the invention is a ceramic membrane, characterized in that the separating layer comprises a synthetic smectite clay which has undergone a modification.

EP 0 887 101 A1

Printed by Jouve, 75001 PARIS (FR)

## Description

## Object of the invention

The object of the invention is a novel type of microporous ceramic membrane suitable for ultrafiltration or nanofiltration and the manufacture thereof.

## Description of the prior art

Inorganic membranes have already been used for some time for many filtration applications. The advantages of an inorganic membrane, viz. its high mechanical strength, its chemical stability and good thermal properties are the reasons why said membranes are used for some applications instead of polymer membranes.

Nanofiltration is a membrane process in which macromolecules having a molecular weight of a few hundreds or a few thousands of daltons or ions are separated from a solution. The separation is based, on the one hand, on a screening action in which the macromolecules cannot diffuse through the membrane pores of the separating layer because of their size and shape and, on the other hand, on a charge effect in which the surface charge of the pore walls prevents the diffusion of charged particles (ions) through the membrane. The degree to which the membrane retains a certain macromolecule or a certain ion is expressed as the retention R:

$$R = 1 - (C_{permeate}/C_{feedstock})$$

and %R = 100 $\times$ R, where
$C_{permeate}$ = concentration of the dissolved substance in the permeate (= that which has flowed through the membrane)
and $C_{feedstock}$ = concentration of the dissolved substance in the feedstock.

In general, inorganic membranes are composed of a carrier, one or more intermediate layers having decreasing pore size and the actual top layer or separating layer. The carrier is made of a metal oxide (in particular, aluminium oxide), a metal or carbon, the intermediate layer(s) and the top layer are generally made of some metal oxides. The carrier is produced, in particular, by conventional powder metallurgy, while the intermediate layer(s) and the top layer are applied by slip casting or a sol/gel coating process. In some cases, CVD (chemical vapour deposition) in one form or another can also be employed to deposit the top layer.

Membranes exist in various forms. Flat, tubular, hollow fibres and multichannel monoliths are the most common embodiments as regards inorganic membranes. The separating layer is applied onto one side of the membrane. For multichannel monoliths, this means that the layer is deposited on the inside of the channels. In the case of tubular membranes, the separating layer may be applied either on the inside or the outside, and for hollow fibres it is generally applied on the outside.

The filtration process can be carried out by "dead-end" and "cross-flow" filtration. In the case of "dead-end" filtration, the feedstock flows perpendicularly to the membrane surface, the retentate remaining behind on the membrane surface. In the case of "cross-flow" filtration, the feedstock flows at a certain velocity over the membrane surface. For liquid filtration, the driving force is a pressure difference over either side of the membrane.

Since the separating layer determines the functioning of the membrane, the pore diameter, the porosity and the composition (for example, the nature of the metal oxide) of said layer is decisive for the functional properties of the membrane. The top layer must have a sufficiently high porosity and must also be deposited as thin as possible so that the flux through the membrane is sufficiently high. Furthermore, the porosity of the carrier and, possibly, the intermediate layer(s) must also be as high as possible, taking into account an adequate mechanical strength.

Zirconium dioxide, titanium dioxide and aluminium oxide separating layers have already been extensively described in various documents (US 5269926, US 5268101, US 5208190, US 5035784, US 5006248, US 5169576, US 5104539, US 5028568 and US 4814202).

FR 2 722 115 describes an inorganic membrane whose separating layer is made of hafnium oxide. From said document, one can learn that, if a small pore diameter (typically < 5 nm) is desired, the flow rate of the liquid to be filtered becomes particularly low and the efficiency consequently decreases.

FR 2 682 614 describes an inorganic membrane which combines a small pore diameter with a large porosity. The separating layer was deposited from the vapour phase with the aid of chemical vapour deposition, which is, however, a fairly expensive procedure.

Synthetic smectite clay has been described in various patents, such as, for example, in US 3,671,190. Said document describes a process for producing synthetic clay-like minerals of the smectite type.

On page 275 of "Shaping of Multilayer Ceramic Membranes by Dip Coating" (Luyten et al., Journal of the European Ceramic Society 17 (1997), 273-279), a Laponite separating layer is described.

Therefore, there is a need for a ceramic nanofiltration membrane having a low pore diameter combined with a high porosity which nevertheless exhibits a high flux.

## General description of the invention

The present invention is related to a ceramic membrane which comprises a separating layer, the separating layer comprising modified synthetic smectite clay. Said membrane can also comprise a porous carrier. The carrier may be a conventional carrier (for example a metal oxide). The separating layer may then be applied thereto. The pore diameter of said layer is less than that of the carrier, which means that the filtering properties are to be attributed solely to the separating layer.

The separating layer may be applied in a conventional manner: a quantity of the synthetic smectite clay is suspended in water. An organic binder (for example poly(vinyl alcohol)) may be added and the suspension can be applied to the carrier. This can be done by dipping one side of the carrier in the suspension and then drying it, so that the solid separating layer is formed. The membrane can then be calcined in order to achieve fixation of the separating layer. Said application process is preferably performed several times so that a separating layer without defects is obtained.

According to the present invention, the synthetic clay is modified. The modification results in an increase in the porosity of the clay. This can be effected with the aid of an acid treatment. The acid treatment may take place before, after or between the coating and the calcination. Preferably, it is carried out before the coating. In that case, the clay is suspended in water and undergoes an acid treatment. The suspension is then washed in order to increase the pH again. All the subsequent steps are as in conventional methods. The result is a membrane which couples a high porosity with a small pore diameter. The production is carried out by means of a simple and cheap procedure.

## Detailed description of the invention

A membrane according to the invention comprises a separating layer which may be deposited on a carrier. Said carrier may have many forms.

The carrier should comprise a porous material having an average pore diameter which is much greater than the intended pore diameter, such as will be the case for the separating layer. The carrier may be composed of a ceramic material, such as $Al_2O_3$, $SiO_2$, $ZrO_2$, ... and may be coated with one or more intermediate layers. In a specific embodiment, the carrier is composed of $Al_2O_3$. The carrier is obtained by pressing an $Al_2O_3$ powder, followed by sintering at 1200°C. A carrier according to this embodiment has an average pore diameter of approximately 0.1-0.2 μm.

The separating layer comprises a modified synthetic smectite clay. This modification produces a greater porosity, while the average pore diameter remains approximately the same. The modification may comprise an acid treatment.

An example of such a synthetic smectite clay is the commercial product Laponite RD (patented product of Laporte Adsorbents, UK).

The preparation of the separating layer is carried out, for example, as follows:

A quantity of the synthetic clay is suspended in demineralized water. The quantity is dependent on the type of clay. No pronounced gel formation must occur. In the case of Laponite RD, this means that the concentration must be between 0.1 and 3 g per 100 ml, and preferably between 0.8 and 1.2 g per 100 ml.

If the acid treatment takes place before the deposition, a quantity of acid is added to said suspension so that the pH of the suspension drops to between 0 and 3 and, preferably, between 0.6 and 1.5. The suspension should be stirred for a few hours so that a clear, stable suspension is obtained. The suspension becomes turbid after the addition of the acid as a result of agglomeration of the clay particles. If the added quantity of acid was sufficient, the turbidity disappears after some time as a result of peptization.

Said suspension is then washed, i.e. the suspension is brought back to a pH of between 1 and 7. This can be done with the aid of a dialysis membrane, such as a SIGMA cellulose membrane having a "molecular weight cutoff" of 12,000. This cutoff value is not fundamental: the important point is that the dialysis membrane is permeable to ions so that H+ ions are in fact able to diffuse through it, but the clay particles are not. The dialysis of the suspension can be carried out using demineralized water (the washing water) until the pH of the washing water no longer varies. The washing procedure can be repeated several times.

Organic binder material, for example poly(vinyl alcohol), is dissolved in water and, if necessary, refluxed for a certain time in order to dissolve the binder completely in the water. The concentration is preferably as close as possible to the maximum solubility at room temperature.

Other possible binder materials are vinyl binders, such as poly(vinyl acetate), polyacrylamide, polyvinylpyrrolidone or carboxyl polymers or cellulose derivatives, such as hydroxyethylcellulose, methylcellulose, sodium carboxymethylcellulose, hydroxypropylmethylcellulose, sodium alginate, starch or dextrin or glycols, such as poly(ethylene glycols).

This solution is added to the dialysed clay suspension and stirred for a few hours. The weight ratio (g of organic binder/g of clay) varies between 0 and 2 and is preferably between 0.2 and 1 g/g.

The separating layer is deposited on a flat carrier by dipping one side of the carrier in the suspension for a certain time. The dipping time may vary between a few seconds and a few minutes. After dipping, drying is carried out. Said drying may be carried out, for example, at a temperature between 15 and 100°C. The deposition on the inside of a tubular carrier may be carried out by introducing the suspension again into the channel of the carrier for a certain time between a few seconds and a few minutes. This is also followed by drying at between 15 and 100°C. The basic principle is retained for all possible types of carriers. Generally, the drying is carried out at room temperature (20-25°C) and in air.

The unit is then calcined to form the porous skeleton of the separating layer. The calcination temperature is between 100 and 900°C, preferably between 350 and 650°C. The calcination time may vary from a few minutes to a few hours, preferably between 1 and 4 hours. The complete procedure is repeated at least once. The acid treatment may, for example, also take place after the calcination step. The acid treatment may also be performed several times during a complete procedure.

## Examples:

### Example 1:

The following steps were performed:

A.   1 g of the synthetic clay Laponite RD is added to 100 ml of demineralized water. The suspension is stirred for 17 hours.

B.   For the acid treatment, 8 ml of 2 M $HNO_3$ are added to the suspension and stirring is carried out for 2 hours. The suspension obtained is then poured into a dialysis membrane (SIGMA, molecular weight cutoff 12,000), and the membrane is clamped along both ends and immersed in 3 litres of demineralized water (the washing water). The washing water is stirred for 2 hours. The pH of the washing water is then approximately 2.7. The washing water is then replaced and washing is again carried out for 2 hours, after which the pH of the washing water is approximately 4.5. The pH of the suspension is then approximately 5.2.

C.   7 g of organic binder, in this case poly(vinyl alcohol) (PVA, Erkol, MW 74,000), are added to 200 ml of water and refluxing is carried out for 4 hours. The solution is cooled and brought to a pH of 1 by adding $HNO_3$.

D.   13.4 ml of the PVA solution are poured into a beaker and 50 ml of the Laponite suspension are added while stirring vigorously. The weight ratio (g of PVA/g of clay) is in this case 1. The suspension obtained, referred to as the dipping liquid, is stirred for 2 hours at room temperature and then poured out into a Petri dish.

E.   To deposit the top layer, a flat $Al_2O_3$ carrier membrane is dipped into the dipping liquid for 5-10 s. This is followed by drying for 17 hours in air.

F.   The thermal treatment of the membranes is carried out at 600°C for 2 hours with a rate of rise of 60°C/hour and a rate of cooling of 120°C/hour.

G.   The complete procedure is repeated once.

### Example 2:

A., B.   As in Example 1.

C.   The organic binder, the concentration and the procedure are the same as in Example 1 except that no acid is added. The pH of the solution is 5.4.

D.-G.   As in Example 1.

### Example 3:

A., B.   As in Example 1.

C.   The organic binder is poly(ethylene glycol) (PEG, Merck-Schuchardt, MW 400). 1 g of PEG is added to 25 ml of water and stirred for 2 hours.

D.   2.3 ml of the PEG solution are added to 50 ml of the Laponite suspension while stirring vigorously. The weight ratio (= g of PEG/g of clay) is in this case 0.2. The suspension obtained, the dipping liquid, is stirred for 2 hours at room temperature and poured out into a Petri dish.

E.   As in Example 1.

F.   The thermal treatment is carried out at 400°C for 2 hours with a rate of rise of 60°C/hour and a rate of cooling of 120°C/hour.

G.   The complete procedure is repeated once.

Comparative Example 1:

A. 1 g of the synthetic clay Laponite RD is added to 100 ml of demineralized water. The suspension is stirred for 17 hours.
B. No acid treatment.
C. No organic binder.
D.-E. To deposit the top layer, a flat $Al_2O_3$ carrier membrane is dipped into the dipping liquid for 5-10 s. This is followed by drying for 17 hours in air.
F. The thermal treatment of the membranes is carried out at 400°C for 2 hours with a rate of rise of 60°C/hour and a rate of cooling of 120°C/hour.

Comparative Example 2:

A. 1 g of the synthetic clay Laponite RD is added to 100 ml of demineralized water. The suspension is stirred for 17 hours.
B. No acid treatment.
C. But organic binder: 2 g of poly(ethylene glycol) (PEG) are added to 100 ml of water and the solution is stirred for 17 h.
D. 5 ml of the PEG solution are added to 100 ml of clay suspension while stirring vigorously. The weight ratio (g of PEG/g of clay) is in this case 0.1. The suspension obtained (the dipping liquid) is stirred for 2-3 hours and then poured out into a Petri dish.
E. To deposit the top layer, a flat $Al_2O_3$ carrier membrane is dipped into the dipping liquid for 5-10 s. This is followed by drying for 17 hours in air.
F. The thermal treatment of the membranes is carried out at 400°C for 2 hours with a rate of rise of 60°C/hour and a rate of cooling of 120°C/hour.

Results:

Table 1:

| | Thickness of top layer (µm) | Porosity (%) | Average pore diameter (nm) |
|---|---|---|---|
| Example 1 | 2 | 51 | 2 |
| Example 2 | 2 | 60 | 3.5 |
| Example 3 | 1-1.5 | 64 | 4 |
| Comparative Example 1 | 3-4 | 27 | 1-2 |
| Comparative Example 2 | 3-4 | 30 | 1-2 |

Example 5:

Four membranes (1a, 1b, 2a and 2b) were fabricated according to Example 2. Two of them (2a and 2b) were also dipped twice into the dipping liquid of Example 1. Said four membranes were tested for nanofiltration.

Three filtration experiments were performed: pure water, NaCl solution (0.001 M) and $MgSO_4$ solution (0.001 M).

Results

Table 2

| Membrane | Water flux ($1/m^2$.h.bar) | NaCl retention (%) | $MgSO_4$ retention (%) |
|---|---|---|---|
| 1a | 24 | 65 | 35 |
| 1b | 36 | 75 | 43.2 |
| 2a | 15.5 | 67.5 | 54.6 |
| 2b | 16.5 | 62.7 | 47.5 |

Table 2   (continued)

| Membrane | Water flux ($1/m^2.h.bar$) | NaCl retention (%) | $MgSO_4$ retention (%) |
| --- | --- | --- | --- |
| Comparative Example 1 | 0.5 | 54.3 | 76.6 |

**Claims**

1.  A ceramic membrane, characterized in that the separating layer comprises a synthetic smectite clay which has undergone a modification.

2.  The ceramic membrane according to Claim 1, characterized in that the modification comprises an acid treatment.

3.  The ceramic membrane according to Claim 1 or 2, characterized in that the membrane also comprises a porous carrier.

4.  The ceramic membrane according to one of Claims 1 to 3, characterized in that the synthetic smectite clay is Laponite.

5.  The ceramic membrane according to one of Claims 3 or 4, characterized in that the porous carrier comprises a metal oxide.

6.  A preparation process of a ceramic membrane whose separating layer comprises a synthetic smectite clay which has undergone a modification, comprising the following steps:

    -   a synthetic smectite clay is suspended in water,
    -   an organic binder is added to said suspension,
    -   a carrier is dipped in the suspension and is allowed to dry,
    -   the membrane is calcinated,
    -   the membrane is submitted to a modification step which is performed after any one of the steps above.

7.  The process according to Claim 6, characterized in that the modification comprises an acid treatment.

8.  The process according to Claim 6 or 7, characterized in that the organic binder is selected from the group consisting of poly(vinyl alcohol), poly(vinyl acetate), polyacrylamide, polyvinylpyrrolidone, carboxyl polymers, glycols and one or more cellulose derivatives selected from the group consisting of hydroxyethylcellulose, methylcellulose, carboxymethylcellulose, hydroxypropylmethylcellulose, alginate, starch and dextrin.

9.  The process according to one of Claims 6 to 8, characterized in that the synthetic smectite clay comprises Laponite.

10. The process according to one of Claims 6 to 9, characterized in that the carrier is flat or tubular.

11. The process according to one of Claims 6 to 10, characterized in that the membrane is calcinated at a temperature between 100 and 900°C.

12. The process according to Claim 11, characterized in that the membrane is calcinated at a temperature between 350 and 650°C.

13. The process according to Claim 11 or 12, characterized in that the membrane is calcinated for a period comprised between 1 to 4 hours.

14. The process according to one of Claims 6 to 13, characterized in that the organic binder/clay weight ratio is between 0 and 2 g/g, preferably between 0.2 and 1 g/g.

15. The process according to one of Claims 7 to 14, characterized in that the acid treatment is carried out when the synthetic smectite clay is in suspension.

16. The process according to Claim 15, characterized in that the acid treatment produces a lowering of the pH of the suspension to between 0 and 3.

17. The process according to Claim 16, characterized in that the acid treatment produces a lowering of the pH of the suspension to between 0.6 and 1.5.

18. The process according to one of Claims 15 to 17, characterized in that it comprises a washing step after the acid treatment.

19. The process according to Claim 18, characterized in that the washing step comprises a dialysis of the suspension.

20. The process according to one of Claims 18 or 19, characterized in that the pH of the suspension is maintained between 1 and 7 after the washing step.

21. Use of a ceramic membrane according to one or more of Claims 1 to 5, for performing a separation by ultrafiltration or nanofiltration.

## EUROPEAN SEARCH REPORT

**European Patent Office**

Application Number

EP 98 87 0141

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 385 876 A (SCHWARZ JAMES A ET AL) 31 January 1995 KOLOM 5, REGELS 14-15, KOLOM 3 REGELS 1-4 --- | 1 | B01D71/02 |
| A,D | J. LUYTEN ET AL.: "SHAPING OF MULTILAYER CERAMIC MEMBRANES BY DIP COATING" JOURNAL OF THE EUROPEAN CERAMIC SOCIETY, vol. 17, no. 2-3, 1997, pages 273-279, XP002069612 POC038 --- | 1 | |
| A | ISHIGURO M ET AL: "REVERSE OSMOSIS SEPARATION FOR A MONTMORILLONITE MEMBRANE" JOURNAL OF MEMBRANE SCIENCE, vol. 107, no. 1/02, 15 November 1995, pages 87-92, XP000638362 --- | 1 | |
| A | EP 0 276 954 A (AMERICAN COLLOID CO) 3 August 1988 * the whole document * ----- | 2 | |

TECHNICAL FIELDS SEARCHED (Int.Cl.6)

B01D
B01J

The present search report has been drawn up for all claims

| Place of search | Date of completion of the search | Examiner |
|---|---|---|
| THE HAGUE | 24 September 1998 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document